# EUROPÄISCHE PATENTSCHRIFT

(11) **EP 2 709 269 B1**
(45) Veröffentlichungstag und Bekanntmachung des Hinweises auf die Patenterteilung: **07.11.2018**
(21) Anmeldenummer: 13004331.8
(22) Anmeldetag: 04.09.2013
(51) Int. Cl.: H02P 31/00, B25F 5/00, H02P 1/22, A01G 3/053, A01D 46/26

(54) **HANDGEFÜHRTES ARBEITSGERÄT MIT EINER ANSTEUERSCHALTUNG FÜR EINEN OSZILLIERENDE WERKZEUGE ANTREIBENDEN ELEKTROMOTOR**
MANUALLY OPERATED WORK DEVICE HAVING A CONTROL CIRCUIT FOR AN ELECTRIC MOTOR THAT DRIVES OSCILLATING TOOLS
APPAREIL DE TRAVAIL MANUEL DOTÉ D'UN CIRCUIT D'ENTRAÎNEMENT POUR UN MOTEUR ÉLECTRIQUE ENTRAÎNANT UN OUTIL OSCILLANT

(30) Priorität: 12.09.2012 DE 102012017963
(43) Veröffentlichungstag der Anmeldung: 19.03.2014
(73) Patentinhaber: Andreas Stihl AG & Co. KG, 71336 Waiblingen (DE)
(72) Erfinder: Klöker, Jens, 71336 Waiblingen-Bittenfeld (DE); Luz, Jochen, 71336 Waiblingen-Hohenacker (DE)
(74) Vertreter: Wasmuth, Rolf

(56) Entgegenhaltungen:
- EP-A1- 2 027 768
- WO-A1-2012/010190

## Beschreibung

Die Erfindung betrifft ein handgeführtes Arbeitsgerät mit einem Elektromotor und einer Ansteuerschaltung für den Elektromotor nach dem Oberbegriff des Anspruchs 1.

Derartige Arbeitsgeräte wie z. B. Olivenernter, Heckenscheren oder dgl. weisen einen Elektromotor auf, dessen drehende Antriebswelle über ein Getriebe ein Arbeitswerkzeug oszillierend antreibt. Das Getriebe setzt dabei die rotatorische Bewegung in eine Hin- und Herbewegung der Arbeitswerkzeuge um.

Der Elektromotor liegt in einem Stromkreis aus zumindest dem Elektromotor und einem Schalter, über den der Elektromotor an einem Netz oder einem Akkupack in Betrieb genommen wird.

Es hat sich gezeigt, dass die Umsetzung der drehenden Antriebsbewegung des Elektromotors in eine oszillierende Arbeitsbewegung der Arbeitswerkzeuge das Getriebe belastet und einseitig verschleißt. Um einen Ausfall des Getriebes zu vermeiden, muss dieses entsprechend robust und für die bevorzugte Drehrichtung ausgelegt werden. Dies führt zu einem aufwendigen Getriebe und daher zu einem hohen Gewicht, einer schlechten Ergonomie und einem schlechten Handling des Arbeitsgerätes.

Aus der WO 2012/010190 A1 ist ein elektrischer Antrieb für eine Heckenschere bekannt, die einen Logikkreis aufweist. Der Logikkreis generiert zufällige Anfahrparameter für den Elektromotor, durch die die Startrichtung des Elektrowerkzeugs vorgegeben wird.

Bei der aus der EP 2 027 768 A1 bekannten Heckenschere ist vorgesehen, bei einem Verklemmen der Schneidblätter die Drehrichtung des antreibenden Elektromotors umzukehren. Hierzu ist eine Überwachung der Stromaufnahme des antreibenden Elektromotors vorgesehen, die bei Überschreiten eines Stromgrenzwertes einen Wechsel der Drehrichtung ausführt.

Der Erfindung liegt die Aufgabe zugrunde, den Verschleiß eines zwischen einem drehenden Elektromotor und einem oszillierenden Arbeitswerkzeug angeordneten Getriebes zu senken.

Die Aufgabe wird nach den kennzeichnenden Merkmalen des Anspruchs 1 gelöst.

Es ist eine Steuervorrichtung zum Betrieb des Elektromotors in einer von zwei Drehrichtungen vorgesehen. Die Steuervorrichtung wählt selbstständig ohne direkten Eingriff durch den Benutzer eine der beiden möglichen Drehrichtungen des Elektromotors anhand einer Steuergröße aus, dessen Wert vor dem Start des Elektromotors abgefragt wird. So können z. B. ein erster Wert der Steuergröße einer ersten Drehrichtung des Elektromotors und ein zweiter Wert der Steuergröße einer zweiten Drehrichtung des Elektromotors zugeordnet sein. Wird der Elektromotor gestartet, wird von der Steuervorrichtung die Drehrichtung des Elektromotors bestimmt und der Elektromotor in der ausgewählten Drehrichtung in Betrieb genommen, die dem abgefragten Wert der Steuergröße entspricht.

Es ist erfindungswesentlich vorgesehen, dass die Steuergröße - nach vorgegebenen Kriterien - vor einem Wiederstart des Elektromotors ihren Wert wechselt, so dass bei einem Wiederstart des Elektromotors in einem folgenden Betriebszyklus ein anderer Wert der Steuergröße vorliegen kann. Liegt ein anderer Wert vor, wird von der Steuervorrichtung eine invertierte Drehrichtung vorgegeben und der Elektromotor in der anderen Drehrichtung in Betrieb genommen. Dadurch wird erreicht, dass die Drehrichtung des Elektromotors über eine längere Betriebszeit des Arbeitsgerätes in den aufeinanderfolgenden Betriebszyklen des Elektromotors wiederholt selbstständig gewechselt ist, so dass das Getriebe nicht nur in einer Drehrichtung belastet wird, sondern in beiden Drehrichtungen belastet wird. Dieses wiederholte Umschalten der Laufrichtung des das Arbeitswerkzeug antreibenden Elektromotors führt zu einem gleichmäßigeren Verschleiß des Getriebes, wodurch sich bei gleicher konstruktiver Auslegung insgesamt längere Standzeiten für das Getriebe selbst ergeben. Dies eröffnet auch die Möglichkeit, einfacher gestaltete Getriebe aus vorzugsweise leichten Materialien einzusetzen, so dass durch Einsparung von Gewicht das Handling und die Ergonomie des Arbeitsgerätes verbessert sind.

Nach der Erfindung ist vorgesehen, dass der Wert der Steuergröße in Abhängigkeit eines Vergleichs der Laufzeit des Elektromotors in der einen Drehrichtung und der Laufzeit des Elektromotors in der anderen Drehrichtung gewechselt wird. So wird sichergestellt, dass der Motor immer in der Drehrichtung gestartet wird, deren Laufzeit geringer ist. Hierzu wird die Laufzeit des rechtsdrehenden Elektromotors in einem ersten Summierglied aufaddiert und die Laufzeit des linksdrehenden Elektromotors in einem zweiten Summierglied aufaddiert. Die Ausgangssignale des ersten und zweiten Summiergliedes sind einem Vergleicher zugeführt, der als Ausgangssignal den Wert der Steuergröße ausgibt.

Die Drehrichtungsumkehr des Elektromotors ändert die oszillierende Bewegung (Hin- und Herbewegung, Wischerbewegung, translatorische Bewegung und dgl.) des Arbeitswerkzeuges selbst nicht. Insoweit ergeben sich durch die Drehrichtungsumkehr keine Nachteile bei der Arbeit mit den oszillierenden Arbeitswerkzeugen des Arbeitsgerätes.

Vorzugsweise ist vorgesehen, dass die Steuergröße in einem Zeitfenster nach dem Starten des Elektromotors und vor einem nächsten Wiederstart des Elektromotors ihren Wert wechselt. Dabei ist insbesondere vorgesehen, dass die Steuergröße zwischen zwei vorgegebenen Werten wechselt, wobei ein erster Wert einer ersten Drehrichtung des Elektromotors (z. B. Rechtslauf) zugeordnet ist und ein zweiter Wert einer zweiten Drehrichtung des Elektromotors (z. B. Linkslauf) zugeordnet ist. Vorteilhaft wechselt die Steuergröße z. B. zwischen den Werten "0" und "1", entsprechend der Binärcodierung handelsüblicher Speicher.

Zweckmäßig ist vorgesehen, dass der Wert der Steuergröße in einem Speicher der Ansteuerschaltung abgespeichert ist. Der Speicher kann beispielsweise ein EPROM Speicherbaustein oder auch als EEPROM, FRAM, DRAM oder als bistabile oder monostabile Kippstufe (Flipflop) ausgebildet sein.

Vorteilhaft ist die Steuervorrichtung mit einem Mikroprozessor versehen, wobei der Speicher in dem Mikroprozessor ausgebildet sein kann. Dieser Speicher kann ein flüchtiger Speicher sein, wobei vorgesehen ist, dass der Elektromotor bei gelöschtem Speicher bzw. bei undefiniertem Speicherinhalt in einer eingeprägten, vorgegebenen Drehrichtung gestartet wird. Der Elektromotor läuft somit bei gelöschtem Speicher bzw. bei undefiniertem Speicherinhalt immer in der gleichen Drehrichtung an, z. B. im Rechtslauf.

Vorteilhaft ist als Energiequelle zum Betrieb des Elektromotors ein im Gehäuse des Arbeitsgerätes aufgenommener Akkupack vorgesehen.

Weitere Merkmale der Erfindung ergeben sich aus den weiteren Ansprüchen, der Beschreibung und Zeichnung, in der ein nachfolgend im Einzelnen beschriebenes Ausführungsbeispiel der Erfindung dargestellt ist. Es zeigen:
- Fig. 1: eine perspektivische Ansicht eines Erntewerkzeuges,
- Fig. 2: eine vergrößerte Ansicht des Details II in Fig. 1,
- Fig. 3: eine schematische Darstellung einer Ansteuerschaltung für einen elektronisch kommutierten Elektromotor,
- Fig. 4: eine schematische Darstellung einer Vergleichsschaltung zur Auswertung der Laufzeiten in der einen und der anderen Drehrichtung des Elektromotors,
- Fig. 5: ein Ausgangssignal der Vergleichsschaltung nach Fig. 4,
- Fig. 6: ein Ablaufdiagramm zum Betrieb des Elektromotors,
- Fig. 7: ein Schaubild der über eine Zeitachse aufgetragenen Betriebszyklen,
- Fig. 8: ein Schaubild der über eine Zeitachse aufgetragenen Betriebszeiten,
- Fig. 9: eine perspektivische Ansicht eines weiteren Arbeitsgerätes am Beispiel einer Heckenschere.

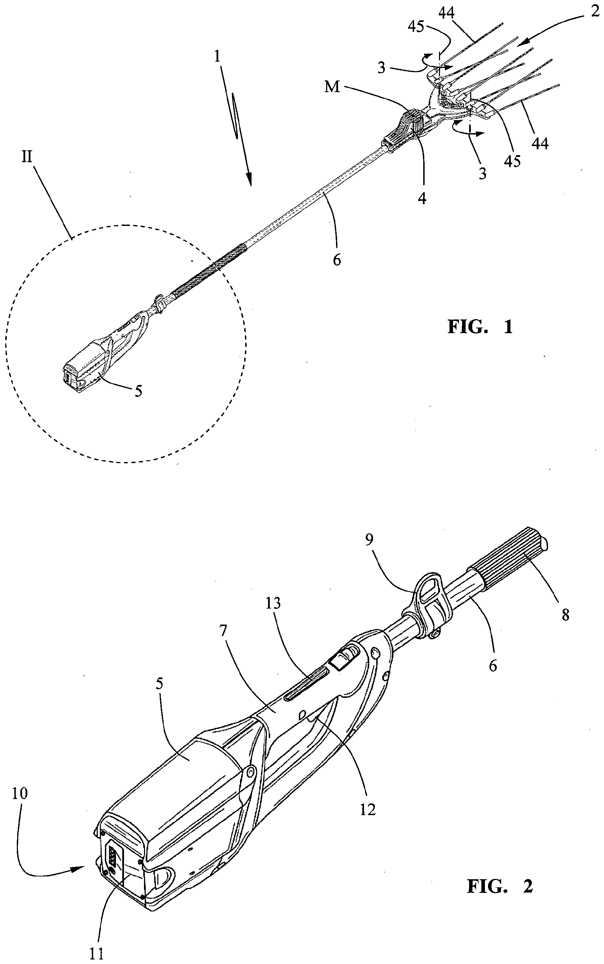

Das in Fig. 1 dargestellte handgeführte Arbeitsgerät 1 ist ein Erntegerät mit oszillierend bewegten Arbeitswerkzeug 2, z. B. Rechen, die sich in Richtung des Doppelpfeils 3 um ihre Anlenkachsen 45 bewegen. Die oszillierenden Arbeitswerkzeuge 2 führen Wischerbewegungen um die Achsen 45 aus. Die Werkzeugbewegung wird über ein Getriebe 4 erzeugt, welches die Drehbewegung eines im Getriebegehäuse angeordneten Elektromotors M in eine oszillierende Bewegung des Arbeitswerkzeugs 2 umsetzt. Das Getriebe 4 mit dem Elektromotor ist an dem einen Ende einer Führungsstange 6 des Arbeitsgeräts 1 vorgesehen, wobei an dem anderen Ende der Führungsstange 6 ein Gehäuse 5 mit einer Energiequelle, im Ausführungsbeispiel ein Akkupack 11 vorgesehen ist. Der Akkupack 11 kann als auswechselbarer Akkupack 11 in einem Schacht des Gehäuses 5 aufgenommen sein oder auch aus fest im Gehäuse 5 vorgesehenen Einzelzellen bestehen.

Der Benutzer hält und führt das Arbeitsgerät 1 über einen am Gehäuse 5 ausgebildeten Handgriff 7 sowie einen Griffbereich 8 an der Führungsstange 6. Es kann zweckmäßig sein, das Arbeitsgerät 1 über eine an der Führungsstange 6 befestigte Öse 9 an einem Traggurt, einem Tragbaum oder dgl. einzuhängen.

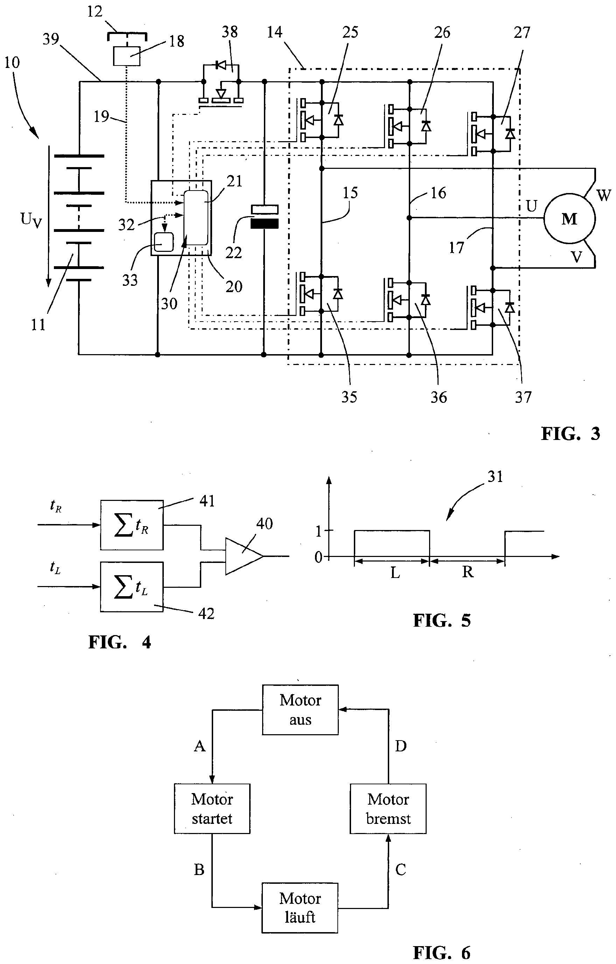

Im gezeigten Ausführungsbeispiel nach Fig. 1 ist im Gehäuse 5 die Energiequelle 10 für den Elektromotor M (Fig. 3), im Ausführungsbeispiel der Akkupack 11 eingeschoben, der - wie insbesondere Fig. 2 zeigt - im Wesentlichen vollständig im Gehäuse 5 des Arbeitsgerätes 1 aufgenommen ist.

Im Handgriff 7 ist ein Betriebsschalter 18 (Fig. 3) angeordnet, der als Potentiometer, Mikroschalter oder dgl. ausgebildet sein kann. Der Betriebsschalter 18 (Fig. 3) ist über ein gashebelähnliches Betätigungsglied 12 zu bedienen. Das Betätigungsglied 12 ist über eine Betätigungssperre 13 gesichert, nach deren Niederdrücken das Betätigungsglied 12 und der im Handgriff 7 vorgesehene Betriebsschalter 18 betätigt werden können.

Die Ansteuerung des Elektromotors M ist in Fig. 3 am Beispiel eines elektronisch kommutierten Motors (EC-Motor) mit einer Ansteuerbrücke 14 dargestellt. Alternativ kann auch ein bürstenbetriebener Gleichstrommotor (DC-Motor) mit entsprechend vereinfachter Ansteuerung, z. B. einer H-Brücke zur Drehrichtungsumkehr, verwendet werden.

Im Ausführungsbeispiel wird der elektronisch kommutierte Elektromotor M über eine Ansteuerbrücke 14 pulsweitenmoduliert (PWM) angesteuert. Die Ansteuerbrücke 14 besteht im Wesentlichen aus drei Parallelzweigen 15, 16 und 17, in denen jeweils zwei in Reihe geschaltete elektronische Schalter 25, 35; 26, 36; 27, 37 vorgesehen sind. Zwischen den elektronischen Schaltern 25 und 35, 26 und 36 und 27 und 37 ist jeweils der Spannungsabgriff für die Phasen U, V und W des elektronisch kommutierten Elektromotors M (EC-Motor) vorgesehen.

Die elektronischen Schalter 25, 26, 27 bzw. 35, 36, 37 sind bevorzugt Leistungstransistoren, insbesondere MOSFET's oder dgl. elektronische Bauelemente.

Die elektronischen Schalter 25, 26, 27, 35, 36, 37 der Ansteuerbrücke 14 werden von einer Ansteuerschaltung 20 angesteuert, wobei die Ansteuerschaltung 20 einen Mikroprozessor 21 umfasst, der in Abhängigkeit von der Stellung des Rotors des Elektromotors M die zugeordneten elektronischen Schalter 25, 26, 27, 35, 36, 37 betätigt.

Über eine Signalleitung 19 wird dem Mikroprozessor 21 der Ansteuerschaltung 20 die mechanische Stellung des Betriebsschalters 18 und somit dessen Betätigung übermittelt, worauf die Ansteuerschaltung 20 einen als Hauptschalter 38 im Stromkreis 39 vorgesehenen MOSFET durchschaltet und die Versorgungsspannung U_{V} des Akkupacks 11 auf die Ansteuerbrücke 14 aufschaltet. Danach wird die Ansteuerbrücke 14 in Betrieb genommen und der Elektromotor M in eine ausgewählte Drehrichtung rechts oder links herum gestartet.

Der Hauptschalter 38 kann auch als mechanischer Schalter ausgebildet sein, der durch Niederdrücken eines Betätigungsgliedes vom Benutzer unmittelbar geschaltet wird.

Parallel zur Ansteuerbrücke 14 ist ferner ein Kondensator 22 geschaltet, der bevorzugt ein Elektrolytkondensator ist. Der Kondensator 22 dient dem System als Energiespeicher, der eine aufgrund der PWM-Ansteuerung auftretende Spitzenstrombelastung des Akkupacks 11 glättet.

Die Ansteuerschaltung 20 umfasst eine Steuervorrichtung 30 zum Betrieb des Elektromotors M in einer vorgegebenen Drehrichtung, also entweder in der Drehrichtung L linkslaufend oder in der Drehrichtung R rechtslaufend. Die Drehrichtung L, R des Elektromotors M wird von der Steuervorrichtung 30 in Abhängigkeit des Wertes einer Steuergröße 31 gewählt, wie sie beispielhaft in Fig. 5 wiedergegeben ist. Im gezeigten Ausführungsbeispiel wechselt die Steuergröße 31 zwischen zwei vorgegebenen Werten, z. B. zwischen den binären Werten "0" und "1".

Ein erster Wert der Steuergröße 31 ist einer ersten Drehrichtung des Elektromotors M und ein zweiter Wert der Steuergröße 31 einer zweiten Drehrichtung des Elektromotors M zugeordnet. Im gezeigten Ausführungsbeispiel nach Fig. 5 ist dem ersten Wert "0" die Drehrichtung "rechts" und dem zweiten Wert "1" die Drehrichtung "links" zugeordnet (Fig. 5). Im gezeigten Ausführungsbeispiel ist ferner vorgesehen, dass der Wert "0" oder "1" der Steuergröße 31 in einem Speicher 33 abgelegt ist, der bevorzugt in der Ansteuerschaltung 20 vorgesehen ist.

Wird von einem Benutzer das Arbeitsgerät 1 durch Niederdrücken des Betätigungsgliedes 12 und somit durch Einschalten des Betriebsschalters 18 in Betrieb genommen, so wird die Betätigung des Betriebsschalters 18 über die Signalleitung 19 dem Mikroprozessor 21 der Ansteuerschaltung 20 mitgeteilt. Der Mikroprozessor 21 schaltet den als MOSFET ausgeführten Hauptschalter 38 durch. Die im Ausführungsbeispiel im Mikroprozessor 21 integrierte Steuervorrichtung 30 fragt über die Signalleitung 32 den Wert der Steuergröße 31 ab, die im Speicher 33 gespeichert ist. Ist z. B. eine "0" gespeichert, wird die Steuervorrichtung 30 die Laufrichtung "rechts" vorgeben. Die vorgegebene Laufrichtung "rechts" wird vom Mikroprozessor 21 der Ansteuerschaltung 20 umgesetzt, indem über die Ansteuerbrücke 14 der Elektromotor M in der Laufrichtung "rechts" in Betrieb genommen wird. Das Arbeitsgerät ist im Betriebszustand.

Es ist vorgesehen, dass die Steuergröße 31 in einem Zeitfenster nach dem Starten des Elektromotors M und vor einem Wiederstart des Elektromotors M ihren Wert wechselt. Dies kann z. B. derart erfolgen, dass der Mikroprozessor 21 den im Speicher 33 abgespeicherten Wert der Steuergröße zufällig wechselt. Ein entsprechender Zufallsgenerator kann im Mikroprozessor 21 vorgesehen sein und gibt einen Wert aus, der im Speicher 33 abgespeichert wird.

Öffnet der Betriebsschalter 18, wird der Elektromotor M von der Ansteuerschaltung 20 aktiv oder passiv gestoppt. Bei einem Wiederstart des Elektromotors M fragt der Mikroprozessor 21 erneut den Wert des Speichers 33 ab; ist der Wert "0", erfolgt wiederum ein Start in rechter Drehrichtung; ist hingegen im Speicher 33 ein Wert "1" abgespeichert, wird der Elektromotor M von der Ansteuerschaltung 20 linksdrehend in Betrieb genommen.

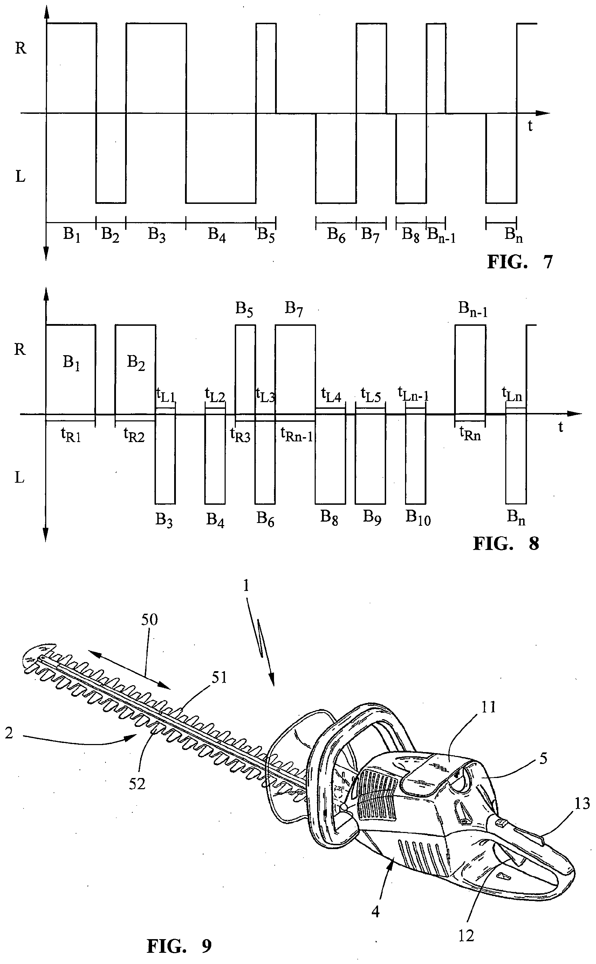

Dieser Wechsel der Betriebszyklen B₁, B₂,...., Bₙ₋₁, Bₙ, ist in den Fig. 7 schematisch wiedergegeben, wobei n eine beliebige natürliche Zahl ist. In den Betriebszyklen B₁, B₃, B₅, B₇, und B₂ₙ₊₁ ist der Elektromotor in Drehrichtung rechts betrieben; in den Betriebszyklen B₂, B₄, B₆, B₈, und B₂ₙ ist der Elektromotor in Drehrichtung links betrieben. Nach Fig. 7 wird nach jedem Stopp des Elektromotors M die Drehrichtung invertiert, also die Drehrichtung L und R periodisch gewechselt.

In der Darstellung nach Fig. 8 erfolgt der Wechsel der Betriebszyklen nicht mit jedem Stopp des Elektromotors M, sondern nach anderen - auch zufälligen - Kriterien. Allgemein gilt, dass nach einem ersten Betriebszyklus Bₙ der Wechsel der Drehrichtung im folgenden Betriebszyklus Bₙ₊ₓ erfolgt, wobei x eine beliebige natürliche Zahl sein kann. Die Drehrichtungsumkehr kann also erst nach dem zweiten oder dritten Betriebszyklus Bₙ₊₂ bzw. Bₙ₊₃ erfolgen, wie in Fig. 7 dargstellt ist.

Bereits ein zufälliger, wiederholter Wechsel der Drehrichtung des Elektromotors M des Arbeitsgeräts führt zu einer gleichmäßigeren Belastung des Getriebes 4, welches die Drehbewegung in eine oszillierende Bewegung der Arbeitswerkzeuge 2 umsetzt. Dadurch kann die Lebensdauer des Getriebes 4 bei ansonsten unveränderter Konstruktion signifikant gesteigert werden.

Die Abfrage des Wertes der Steuergröße 31 erfolgt spätestens kurz vor dem Starten des Elektromotors M. Wie in Fig. 6 dargestellt, ist der Motor zunächst aus bzw. steht im Standby. In Richtung des Pfeils A gehend wird der Elektromotor dann gestartet, also von der Steuervorrichtung 30 in Abhängigkeit des Wertes der Steuergröße 31 in die eine oder andere Drehrichtung in Betrieb genommen. Der Motor läuft (Pfeil B). Der Elektromotor M kann über die Ansteuerschaltung 20 aktiv oder passiv zum Stillstand gebracht werden (Pfeil C); der Elektromotor steht und hat seinen Ausgangszustand "Motor aus" eingenommen (Pfeil D). Die Änderung bzw. der Wechsel des Wertes der Steuergröße 31 kann in dem Zeitfenster von Beginn des Pfeils B bis zur Spitze des Pfeils A vorgenommen werden, also vom Start des Elektromotors M bis zum Wiederstart des Elektromotors M.

Im Ausführungsbeispiel nach Fig. 3 ist gezeigt, dass über die Signalleitung 19 die mechanische Betätigung des Betriebsschalters 18 dem Mikroprozessor 21 mitgeteilt ist. Mit jedem Betätigen des Betriebsschalters 18 kann der Wert der Steuergröße 31 gewechselt werden. Immer dann, wenn der Betriebsschalter 18 eingeschaltet wird, kann der Mikroprozessor 21 einen neuen Wert der Steuergröße in den Speicher 33 schreiben. Bei einem ersten Betätigen des Betriebsschalters 18 legt der Mikroprozessor 21 z. B. eine "1" im Speicher 33 ab; bei einem erneuten Betätigen des Betriebsschalters 18 legt der Mikroprozessor 21 den Wert "0" im Speicher 33 ab. Dadurch ändert sich der Wert der Steuergröße mit jedem Betätigen des Betriebsschalters 18, so dass z.B. bei einem ersten Betätigen des Betriebsschalters 18 und Starten des Elektromotors M die Drehrichtung R (rechts) gegeben ist. Da der Wert der Steuergröße 31 nur direkt beim Start des Elektromotors M ausgelesen wird, kann es im Betrieb des Arbeitsgerätes 1 bei laufendem Elektromotor M auch bei einem Wechsel des Wertes der Steuergröße 31 zu keiner Drehrichtungsumkehr des Elektromotors M kommen. Erst bei einem zweiten Betätigen des Betriebsschalters 18 und Starten des Elektromotors M wird die invertierte Drehrichtung L (links) ausgeführt. Bei einem dritten Betätigen des Betriebsschalters 18 zum Starten des Elektromotors M dreht dieser wiederum rechts herum. Es erfolgt ein periodisches, jeweils invertiertes Umschalten der Laufrichtung des Elektromotors M in den unmittelbar aufeinanderfolgenden Betriebszyklen B₁, B₂, B₃, , Bₙ₋₁, Bₙ, wie dies in Fig. 7 wiedergegeben ist. Der Elektromotor startet jeweils in einer anderen, invertierten Drehrichtung R bzw. L.

In einem in Fig. 4 dargestellten Ausführungsbeispiel wird der Wert der Steuergröße in Abhängigkeit eines Vergleichs der Laufzeiten t_{R}, t_{L} des Elektromotors M in der einen Drehrichtung und in der anderen Drehrichtung gewechselt. Die Laufzeit t_{R} des rechtsdrehenden Elektromotors M wird in einem Summierglied 41 aufaddiert. Entsprechend wird die Laufzeit t_{L} des linksdrehenden Elektromotors in einem Summierglied 42 aufsummiert. Die Ausgangssignale der Summierglieder 41 und 42 werden einem Vergleicher 40 zugeführt, der so ausgelegt ist, dass als Ausgangssignal entweder eine "0" oder eine "1" ausgegeben wird. Ist z. B. die ausgegebene Größe des Summiergliedes 41 (Rechtslauf) größer als die ausgegebene Größe des Summiergliedes 42 (Linkslauf), so gibt der Vergleicher 40 den Wert "1" aus. Entsprechend Fig. 5 wird die Steuergröße 31 somit auf den Wert "1" gesetzt, so dass bei einem erneuten Start des Elektromotors M der Elektromotor linksdrehend in Betrieb genommen wird, da der Wert "1" der Steuergröße 31 im Ausführungsbeispiel der Drehrichtung "links" zugeordnet ist. Dreht der Motor nun in Drehrichtung links, wird nach einer bestimmten Laufzeit das Summierglied 42 ein größeres Ausgangssignal zeigen als das Summierglied 41; das Ausgangssignal des Vergleichers wechselt auf "0". Die Steuergröße 31 wird auf den Wert "0" gesetzt, so dass bei einem Wiederstart des Elektromotors M dieser nun in Abhängigkeit von der Steuergröße 31 rechtsdrehend gestartet wird.

Der dadurch erzielte Wechsel der Drehrichtung ist somit abhängig von den Summen der Laufzeiten in die eine oder in die andere Drehrichtung L, R. Beispielhaft ist dies in Fig. 8 wiedergegeben, in der die Betriebszyklen mit ihren Zeiten t_{R1}, t_{R2} bis t_{Rn-1}, t_{Rn} und t_{L1}, t_{L2} bis t_{Ln-1}, t_{Ln} wiedergegeben sind. Die Betriebszyklen in Fig. 8 sind willkürlich gewählt, sind somit ein Beispiel für einen zufälligen Wert der Steuergröße 31.

Zweckmäßig kann der Wechsel des Wertes der Steuergröße 31 auch anhand der Leistungsaufnahme des Elektromotors M in der einen und in der anderen Drehrichtung ausgeführt werden. Entsprechend der Darstellung in Fig. 4 wird die aufgenommene elektrische Leistung des Elektromotors M in der einen Drehrichtung R und die aufgenommene elektrische Leistung des Elektromotors in der anderen Drehrichtung L in Summiergliedern 41 und 42 aufsummiert und einem Vergleicher 40 zugeführt. Ist z. B. die ausgegebene Größe des Summiergliedes 41 (Rechtslauf) größer als die ausgegebene Größe des Summiergliedes 42 (Linkslauf), so wechselt der Vergleicher 40 den Wert der Steuergröße in "1"; ist die ausgegebene Größe des Summiergliedes 41 (Rechtslauf) kleiner als die ausgegebene Größe des Summiergliedes 42 (Linkslauf), so wechselt der Vergleicher 40 den Wert der Steuergröße in "0".

Der in Fig. 3 in der Ansteuerschaltung 20 gezeigte Speicher 33 kann zweckmäßig innerhalb des Mikroprozessors 21 vorgesehen sein, wobei der Speicher insbesondere ein flüchtiger Speicher sein kann, d. h., dass bei stromloser Ansteuerschaltung 20 der gespeicherte Wert der Steuergröße 31 verloren geht. Bei einem Wiederstart fragt die zweckmäßig im Mikroprozessor 21 integrierte Steuervorrichtung 30 den Wert der Steuergröße 31 ab; da der Speicher 33 gelöscht ist oder einen undefinierten Speicherinhalt enthält, startet der Elektromotor M in einer eingeprägten, vorgegebenen Drehrichtung, z. B. rechts herum. Bei der ersten Bestromung der Ansteuerschaltung 20 kann ein vorgegebener Wert der Steuergröße 31 in den Speicher 33 geschrieben werden; der Speicher 33 wird so initialisiert. Der in den Speicher 33 eingeschriebene Wert der Steuergröße 31 legt z. B. nach einem Wechsel des Akkupacks 11 die beim ersten Start des Elektromotors M auszuführende Drehrichtung L oder R fest.

Der Speicher 33 kann beispielsweise auch als Flash-Speicher, als EPROM-Speicher, als EEPROM, als FRAM, als DRAM oder dgl. ausgebildet sein.

In einer weiteren Ausführungsform der Erfindung kann vorgesehen sein, bei einem elektronisch kommutierten Elektromotor M den Wert der Steuergröße 31 bzw. den im Speicher 33 abgespeicherten Wert der Steuergröße 31 unabhängig vom Ein- und Ausschalten des Betriebsschalters 18 immer dann zu wechseln, wenn z. B. einer der elektronischen Schalter 25, 26, 27, 35, 36, 37 der Ansteuerbrücke 14 betätigt wird. Dies führt im Betrieb zwar zu einem wiederholten Wechseln des Wertes der Steuergröße, es ergibt sich aber in einfacher Weise ein zufälliger Wert der Steuergröße, wobei über eine längere Nutzung des Arbeitsgerätes der Elektromotor zufällig rechtslaufend oder linkslaufend in Betrieb genommen wird. Bei jedem Wiederstart wird die Steuergröße einen zufälligen Wert "0" oder "1" haben, dem entsprechend der Elektromotor M rechts oder links herum gestartet wird. Dabei kann vorgesehen sein, dass der Wert der Steuergröße nur dann gewechselt wird, wenn ein ausgewählter, bestimmter Schalter 25, 26, 27, 35, 36, 37 der Ansteuerbrücke 14 betätigt wird. Ein möglicher Ablauf derartiger Betriebszyklen ist in Fig. 8 wiedergegeben.

Die erfindungsgemäße Ansteuerschaltung ist auch bei einem Arbeitsgerät 1 nach Fig. 9 vorteilhaft, welches eine Heckenschere darstellt. Im Gehäuse 5 des Arbeitsgerätes 1 ist wiederum ein Akkupack 11 eingeschoben, der die Energiequelle 10 (Fig. 3) für einen im Gehäuse 5 angeordneten Elektromotor M (Fig. 3) bildet. Der Elektromotor treibt ein im Gehäuse angeordnetes Getriebe 4 an, welches die Drehbewegung des Elektromotors in eine Hin- und Herbewegung des Arbeitswerkzeugs 2, im Ausführungsbeispiel der Messerblätter 51 und 52 umsetzt, die in Richtung des Doppelpfeils 50 translatorisch bewegt werden.

## Patentansprüche

1. Handgeführtes Arbeitsgerät (1) mit einem Elektromotor (M) und mit einer Ansteuerschaltung (20) für den Elektromotor (M),
- wobei der Elektromotor (M) über ein Getriebe (4) ein Arbeitswerkzeug (2) antreibt,
- und die Drehbewegung des Elektromotors (M) über das Getriebe (4) in eine oszillierende Bewegung des Arbeitswerkzeugs (2) umgewandelt ist,
- und mit einem Stromkreis (39) aus zumindest dem Elektromotor (M) und einem Schalter (25, 26, 27, 35, 36, 37, 38) zum Betrieb des Elektromotors (M) in einer Drehrichtung,
- dass in der Ansteuerschaltung (20) eine Steuervorrichtung (30) zum Betrieb des Elektromotors (M) in einer von zwei Drehrichtungen vorgesehen ist,
- dass die Steuervorrichtung (30) in Abhängigkeit einer Steuergröße (31) selbstständig eine ausgewählte Drehrichtung des Elektromotors (M) für einen nächsten Betriebszyklus (Bₙ) bestimmt
- und bei Start des Elektromotors (M) der Elektromotor (M) in der einem Wert der Steuergröße (31) zugeordneten Drehrichtung gestartet wird,
- und dass der Wert der Steuergröße (31) für einen folgenden Betriebszyklus (Bₙ₊ₓ) selbstständig neu bestimmt wird,
**dadurch gekennzeichnet,**
- **dass** der Wert der Steuergröße (31) in Abhängigkeit eines Vergleichs der Laufzeit (tR) des Elektromotors in der einen Drehrichtung und der Laufzeit (t_{L}) des Elektromotors in der anderen Drehrichtung neu bestimmt wird,
- wozu die Laufzeit (t_{R}) des rechtsdrehenden Elektromotors (M) in einem ersten Summierglied (41) aufaddiert wird,
- und die Laufzeit (t_{L}) des linksdrehenden Elektromotors (M) in einem zweiten Summierglied (42) aufaddiert wird,
- und die Ausgangssignale des ersten und zweiten Summiergliedes (41, 42) einem Vergleicher (40) zugeführt sind,
- und der Vergleicher (40) als Ausgangssignal den Wert der Steuergröße (31) ausgibt.

2. Arbeitsgerät nach Anspruch 1,
**dadurch gekennzeichnet, dass** der Wert der Steuergröße (31) in einem Zeitfenster nach dem Start des Elektromotors (M) und vor einem nächsten Wiederstart des Elektromotors (M) neu bestimmt wird.

3. Arbeitsgerät nach Anspruch 1 oder 2,
**dadurch gekennzeichnet, dass** der Wert der Steuergröße (31) zwischen einem einer ersten Drehrichtung des Elektromotors (M) zugeordneten ersten Wert und einem einer zweiten Drehrichtung des Elektromotors (M) zugeordnet zweiten Wert wechselt.

4. Arbeitsgerät nach einem der Ansprüche 1 bis 3,
**dadurch gekennzeichnet, dass** der Wert der Steuergröße (31) in einem Speicher (33) abgespeichert ist.

5. Arbeitsgerät nach Anspruch 4,
**dadurch gekennzeichnet, dass** die Steuervorrichtung (30) einen Mikroprozessor (21) aufweist und der Speicher (33) in dem Mikroprozessor (21) vorgesehen ist.

6. Arbeitsgerät nach Anspruch 4 oder 5,
**dadurch gekennzeichnet, dass** der Speicher (33) ein flüchtiger Speicher ist.

7. Arbeitsgerät nach einem der Ansprüche 4 bis 6,
**dadurch gekennzeichnet, dass** bei gelöschtem Speicher (33) mit undefiniertem Speicherinhalt die Steuervorrichtung (30) den Elektromotor (M) in einer vorgegebenen Drehrichtung startet.

8. Arbeitsgerät nach einem der Ansprüche 1 bis 7,
**dadurch gekennzeichnet, dass** als Energiequelle zum Betrieb des Elektromotors (M) ein Akkupack vorgesehen ist.

## Claims

1. Hand-guided working implement (1) with an electric motor (M) and with a control circuit (20) for the electric motor (M),
- wherein the electric motor (M) drives a tool (2) via a gear mechanism (4),
- and the rotary movement of the electric motor (M) is converted into an oscillating movement of the tool (2) via the gear mechanism (4),
- and with an electric circuit (39) comprising at least the electric motor (M) and a switch (25, 26, 27, 35, 36, 37, 38) of operating the electric motor (M) in a direction of rotation,
- wherein a control unit (30) for operating the electric motor (M) in one of two directions of rotation is provided in the control circuit (20),
- wherein the control unit (30) autonomously determines a selected direction of rotation of the electric motor (M) for a next operating cycle (Bₙ) as a function of a control variable (31),
- and wherein at the start of the electric motor (M), the electric motor (M) is started in the direction of rotation assigned to a value of the control variable (31),
- and wherein the value of the control variable (31) for a following operating cycle (Bₙ₊ₓ) is determined autonomously,
**characterised in that**
- the value of the control variable (31) is determined anew as a function of a comparison of the running time (t_{R}) of the electric motor in the one direction of rotation and the running time (t_{L}) of the electric motor in the other direction of rotation,
- for which purpose the running time (t_{R}) of the clockwise rotating electric motor (M) is added up in a first summing element (41),
- and the running time (t_{L}) of the anticlockwise rotating electric motor (M) is added up in a second summing element (42),
- and the output signals of the first and the second summing element (41, 42) are fed to a comparator (40),
- and the comparator (40) outputs the value of the control variable (31) as an output signal.

2. Working implement according to claim 1,
**characterised in that** the value of the control variable (31) is determined anew in a time window after the start of the electric motor (M) and before a next restart of the electric motor (M).

3. Working implement according to claim 1 or 2,
**characterised in that** the value of the control variable (31) alternates between a first value assigned to a first direction of rotation of the electric motor (M) and a second value assigned to a second direction of rotation of the electric motor (M).

4. Working implement according to any of claims 1 to 3,
**characterised in that** the value of the control variable (31) is stored in a memory (33).

5. Working implement according to claim 4,
**characterised in that** the control unit (30) comprises a microprocessor (21) and the memory (33) is provided in the microprocessor (21).

6. Working implement according to claim 4 or 5,
**characterised in that** the memory (33) is a volatile memory.

7. Working implement according to any of claims 4 to 6,
**characterised in that**, if the memory (33) is erased with undefined content, the control unit (30) starts the electric motor (M) in a predetermined direction of rotation.

8. Working implement according to any of claims 1 to 7,
**characterised in that** a battery pack is provided as an energy source for the operation of the electric motor (M).

## Revendications

1. Appareil de travail à main (1) avec un moteur électrique (M) et avec un circuit de pilotage (20) pour le moteur électrique (M),
- le moteur électrique (M) entraînant un outil de travail (2) par l'intermédiaire d'une transmission (4),
- et le mouvement rotatif du moteur électrique (M) étant transformé par l'intermédiaire de la transmission (4) en mouvement oscillant de l'outil de travail (2),
- et avec un circuit électrique (39) composé au moins du moteur électrique (M) et d'un commutateur (25, 26, 27, 35, 36, 37, 38) pour le fonctionnement du moteur électrique (M) dans un sens de rotation,
- un dispositif de commande (30) pour le fonctionnement du moteur électrique (M) dans un des deux sens de rotation étant prévu dans le dispositif de pilotage (20),
- le dispositif de commande (30) définissant de manière autonome, en fonction d'une grandeur de commande (31), un sens de rotation sélectionné du moteur électrique (M) pour un prochain cycle (Bₙ),
- et lors du démarrage du moteur électrique (M), ledit moteur électrique (M) étant démarré dans le sens de rotation attribué à une valeur de la grandeur de commande (31),
- et la valeur de la grandeur de commande (31) étant redéfinie de manière autonome pour un cycle (Bₙ₊ₓ) suivant,
**caractérisé**
- **en ce que** la valeur de la grandeur de commande (31) est redéfinie en fonction d'une comparaison du temps de marche (t_{R}) du moteur électrique dans un sens de rotation et du temps de marche (t_{L}) du moteur électrique dans l'autre sens de rotation,
- le temps de marche (t_{R}) du moteur électrique (M) qui tourne à droite étant pour cela additionné dans un premier élément de totalisation (41),
- et le temps de marche (t_{L}) du moteur électrique (M) qui tourne à gauche étant additionné dans un second élément de totalisation (42),
- et les signaux de sortie des premier et second éléments de totalisation (41, 42) étant transmis à un comparateur (40),
- et le comparateur (40) émettant comme signal de sortie la valeur de la grandeur de commande (31).

2. Appareil de travail selon la revendication 1,
**caractérisé en ce que** la valeur de la grandeur de commande (31) est redéfinie dans un intervalle de temps après le démarrage du moteur électrique (M) et avant un redémarrage suivant du moteur électrique (M).

3. Appareil de travail selon la revendication 1 ou 2,
**caractérisé en ce que** la valeur de la grandeur de commande (31) change entre une première valeur attribuée à un premier sens de rotation du moteur électrique (M) et une seconde valeur attribuée à un second sens de rotation du moteur électrique (M).

4. Appareil de travail selon l'une des revendications 1 à 3,
**caractérisé en ce que** la valeur de la grandeur de commande (31) est stockée dans une mémoire (33).

5. Appareil de travail selon la revendication 4,
**caractérisé en ce que** le dispositif de commande (30) comporte un microprocesseur (21), et la mémoire (33) est prévue dans le microprocesseur (21).

6. Appareil de travail selon la revendication 4 ou 5,
**caractérisé en ce que** la mémoire (33) est une mémoire volatile.

7. Appareil de travail selon l'une des revendications 4 à 6,
**caractérisé en ce que** lorsque la mémoire (33) avec un contenu indéfini est effacée, le dispositif de commande (30) démarre le moteur électrique (M) dans un sens de rotation prédéfini.

8. Appareil de travail selon l'une des revendications 1 à 7,
**caractérisé en ce qu'**il est prévu comme source d'énergie pour le fonctionnement du moteur électrique (M) une batterie.
